## Europäisches Patentamt
## European Patent Office
## Office européen des brevets

(19)

(11) Veröffentlichungsnummer: **0 149 160**

**A2**

(12) # EUROPÄISCHE PATENTANMELDUNG

(21) Anmeldenummer: **84115529.4**

(22) Anmeldetag: **15.12.84**

(51) Int. Cl.⁴: **B 62 D 55/135**

(30) Priorität: **16.01.84 DE 3401256**

(43) Veröffentlichungstag der Anmeldung:
**24.07.85 Patentblatt 85/30**

(84) Benannte Vertragsstaaten:
**AT BE CH DE FR GB IT LI LU NL SE**

(71) Anmelder: **Hoesch Aktiengesellschaft**
**Eberhardstrasse 12**
**D-4600 Dortmund 1(DE)**

(72) Erfinder: **Büllesbach, Peter**
**Luisenstrasse 33a**
**D-5632 Wermelskirchen(DE)**

(72) Erfinder: **Steinborn, Wilhelm**
**Dorfmühlennstrasse 7**
**D-5630 Remscheid(DE)**

(74) Vertreter: **Happe, Otto, Dipl.-Ing.**
**Isselburger Strasse 12**
**D-5000 Köln 60(DE)**

(54) Kettennrad für Kettenfahrzeuge.

(57) Bei einem aus einer Nabe (1) mit daran angeschraubten Zahnkränzen (2) bestehendes Kettenrad, das mit Auflageringen (5) zum Abstützen der Kette versehen ist, sind die Auflageringe (5) an den einander zugekehrten Seiten der Zahnkränze (2) gefestigt.

FIG. 2

EP 0 149 160 A2

Kettenrad für Kettenfahrzeuge

Die Erfindung betrifft ein aus einer Nabe mit daran angeschraubten Zahnkränzen bestehendes Kettenrad für Kettenfahrzeuge, das mit Auflageringen zum Abstützen der Kette versehen ist. Derartige Kettenräder werden insbesondere bei schnellaufenden Kettenlaufwerken von Panzerfahrzeugen verwendet. Der besondere Vorteil dieser Kettenräder besteht darin, daß Zahnkränze, deren Zähne verschlissen sind, in einfacher Weise ausgewechselt werden können, ohne daß die Nabe, die nahezu keinem Verschleiß unterworfen ist, ebenfalls ausgewechselt werden muß.

Bei einem bekannten Kettenrad der vorgenannten Art sind die Auflageringe als fest mit der Nabe verbundene Radtrommeln ausgebildet (DE-OS 26 17 342). Das hat zur Folge, daß beim Auswechseln der Radtrommeln die gesamte Nabe ausgewechselt werden muß.

Der Erfindung liegt die Aufgabe zugrunde, ein Kettenrad der eingangs genannten Art so auszubilden, daß die Auflageringe nach deren Verschleiß in einfacher Weise ausgewechselt werden können. Diese Aufgabe wird durch die im Anspruch 1 angegebene Erfindung gelöst.

Da die Standzeit der Zähne des Zahnkranzes etwa der Standzeit der Auflageringe entsprechen, ist für das Auswechseln der Auflageringe kein besonderer Arbeitsgang erforderlich. Die Auflageringe werden vielmehr gleichzeitig mit den Zahnkränzen ausgewechselt. Hierzu müssen lediglich die Schrauben gelöst werden, die den Zahnkranz mit der Nabe verbinden.

Vorteilhafte Weiterbildungen der Erfindung sind in den Unteransprüchen beschrieben.

Bei Ausbildung des Kettenrades entsprechend dem Anspruch 3 ist gewährleistet, daß der Kette eine ausreichende Abstützfläche zur Verfügung steht.

Die Erfindung ist nachstehend anhand eines in der Zeichnung dargestellten Ausführungsbeispiels näher erläutert. Es zeigen:

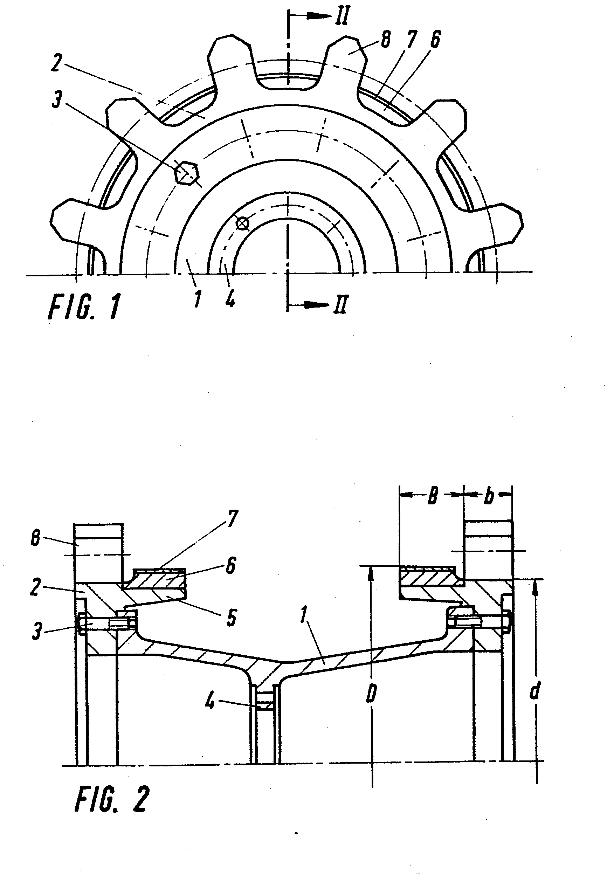

Fig. 1 die obere Hälfte eines Kettenrades in Seitenansicht und

Fig. 2 einen Schnitt nach der Linie II-II in Fig. 1.

Das Kettenrad weist eine Nabe 1 auf, an deren beiden Enden je ein Zahnkranz 2 mittels Schrauben 3 befestigt ist. Die Nabe 1 ist an ihrer Innenseite mit einem Flansch 4 versehen, der zur Befestigung des Kettenrades an einem – nicht dargestellten – Antriebsmotor dient.

Die Zahnkränze 2 weisen an ihren einander zugekehrten Seiten je einen Auflagering 5 zur Abstützung der – nicht dargestellten – Kettenglieder auf, der fest mit dem betreffenden Zahnkranz 2 verbunden ist; bei geschmiedeten Zahnkränzen 2 ist der Auflagering 5 angeschmiedet und bei gegossenen Zahnkränzen 2 ist der Auflagering 5 angegossen. Die Auflageringe 5 sind an ihrer Umfangsfläche mit einer Schicht 6 aus elastischem Werkstoff ausgerüstet, die von einer Verschleißbandage 7 umschlossen ist. Die Breite B des Auflageringes 5 ist größer als die Breite b der Zähne 8 des Zahnkranzes 2. Der Durchmesser D des Auflageringes 5, einschließlich der Schicht 6 und der Verschleißbandage 7, ist größer als der Durchmesser d des Fußkreises der Zähne 8 des Zahnkranzes 2. Die Verschleißbandage 7 ist hinsichtlich ihrer Dicke und ihres Werkstoffs so bemessen, daß ihre Standzeit etwa der Standzeit der Zähne 8 der Zahnkränze 2 entspricht. Das Aufbringen der Schicht 6 und der Verschleißbandage 7 auf den Auflagering 5 kann beispielsweise durch Vulkanisation erfolgen; sowohl bei der Erstherstellung als auch bei der Aufarbeitung.

Das Auswechseln eines verschlissenen Zahnkranzes 2 erfolgt in einfachster Weise durch Lösen der Schrauben 3, die den Zahnkranz 2 mit der Nabe 1 verbinden. Da der Auflagering 5 Bestandteil des Zahnkranzes 2 ist, wird er gleichzeitig mit dem Zahnkranz 2 ausgewechselt.

Ansprüche:

1. Aus einer Nabe mit daran angeschraubten Zahnkränzen bestehendes Kettenrad für Kettenfahrzeuge, das mit Auflageringen zum Abstützen der Kette versehen ist, dadurch gekennzeichnet, daß die Auflageringe (5) an den einander zugekehrten Seiten der Zahnkränze (2) befestigt sind.

2. Kettenrad nach Anspruch 1, dadurch gekennzeichnet, daß die Auflageringe (5) Bestandteil der Zahnkränze (2) sind.

3. Kettenrad nach Anspruch 1 oder 2, dadurch gekennzeichnet, daß die Breite (B) der Auflageringe (5) mindestens so groß wie die Breite (b) der Zahnkränze (2) ist.

4. Kettenrad nach Anspruch 1, 2 oder 3, dadurch gekennzeichnet, daß die Auflageringe (5) an ihrer Umfangsfläche mit einer Schicht (6) aus elastischem Werkstoff versehen ist.

5. Kettenrad nach Anspruch 4, dadurch gekennzeichnet, daß die Schicht (6) aus elastischem Werkstoff von einer Verschleißbandage (7) umschlossen ist.

FIG. 1

FIG. 2